# EUROPÄISCHE PATENTSCHRIFT

(11) **EP 0 438 084 B1**
(45) Veröffentlichungstag und Bekanntmachung des Hinweises auf die Patenterteilung: **15.12.1993**
(21) Anmeldenummer: 91100295.4
(22) Anmeldetag: 11.01.1991
(51) Int. Cl.: B65G 53/32, F04B 15/02

(54) **Betonpumpe für das Nassspritzverfahren**
Concrete pump for wet spraying
Pompe à béton pour la projection humide

(30) Priorität: 12.01.1990 DE 4000720; 31.01.1990 DE 4002760
(43) Veröffentlichungstag der Anmeldung: 24.07.1991
(73) Patentinhaber: Friedrich Wilh. Schwing GmbH, D-44653 Herne (DE)
(72) Erfinder: Schmittchen, Günter, W-4600 Dortmund 72 (DE); v. Eckardstein, Karl Ernst, W-4750 Unna (DE)
(74) Vertreter: Herrmann-Trentepohl, Werner, Dipl.-Ing.

(56) Entgegenhaltungen:
- DE-A- 3 114 027
- US-A- 3 123 407
- US-A- 4 298 288

## Beschreibung

Die Erfindung betrifft eine Betonpumpe für das Naßspritzverfahren gemäß dem Oberbegriff des Anspruches 1.

Das Auftragen von Spritzbeton dient zur sofortigen Sicherung freigelegter Gebirgsoberflächen und wird vor allem als Sicherungsverfahren für die Auffahrung unterirdischer Hohlräume im Berg- und Tunnelbau eingesetzt. Die Erfindung bezieht sich in diesem Zusammenhang auf eine Ausführungsform dieses Verfahrens, bei der das Betongemisch nicht trocken, sondern naß gefördert und die deshalb als Naßspritzverfahren bezeichnet wird. Dieses Naßspritzverfahren hat gegenüber den Trockenspritzverfahren den Vorteil, daß der mit der Düse ausgetragene Beton die gleichen Eigenschaften hat wie ein Normalbeton, also wie ein in einem Zwangs- oder Durchlaufmischer fertiggemischter Beton, bei dem insbesondere ein vorgegebenes Wasserfeststoffverhältnis strickt eingehalten ist. Bei dem Trockenspritzverfahren ist das nicht der Fall, weil das Anmachwasser erst an der Spritzdüse zugesetzt wird.

Im Rahmen dieses Naßspritzverfahrens, für das die erfindungsgemäße Betonpumpe vorgesehen ist, wird der fertige Beton mit Hilfe der Betonpumpe über eine beliebige Strecke bis zur Düse gefördert. In dieser Düse werden Beton und Druckluft zusammengebracht, wodurch der so geförderte Dichtstrom des Betons mit der Druckluft und der Düse bis zur Gebirgsoberfläche gefördert wird, wobei der Beton in Partikel aufgebrochen wird und diese von der sich entspannenden Druckluft auf die Gebirgsoberfläche geschleudert werden. Hierbei wird in der Regel ein Erstarrungsbeschleuniger zugesetzt, d. h. in den Betonstrom eingemischt mit dem Ziel, eine hohe Früh- und Endfestigkeit zu erreichen. Das kann auf verschiedene Weise geschehen. In der Regel benutzt man hierfür eine eigene Dosierpumpe, welche den flüssigen Erstarrungsbeschleuniger vorzugsweise an der Düse mit dem gewollten Mengenverhältnis einbringt.

Beim Verspritzen des Betons entstehen zwangsläufig lungengängige Stäube, worunter u. a. Feinstäube mit einer Teilchengröße bis zu 5 µm und einem Teilchenstoff aus kristallinem Siliciumoxid verstanden werden; Quarzstäube mit einem Teilchendurchmesser von 1 bis 2 µm gelten als besonders gefährlich. Solche Feinstäube sind die Ursache der als unheilbar angesehenen Berufskrankheit Silicose und müssen daher vermieden werden. Das ist besonders schwierig, wenn das unter Druckluftbedingungen erreicht werden soll. Die Notwendigkeit hat sich herausgestellt, seit man weiß, daß die in der Literatur geäußerte Vermutung nicht zutrifft, beim Naßspritzverfahren werde auch zwischen der Düse und dem Gebirge kein lungengefährlicher Feinstaub freigesetzt. Neuere Untersuchungen zeigen vielmehr, daß beim Naßspritzverfahren unabhängig von der Förderung des Betons im Dünn- oder im Dichtstrom eine der Wasserzugabe proportionale Vermehrung des Feinstaubanfalles an der Düse auftritt (Zeitschrift Bergbau 6/88 SS. 243, 248).

Es ist bekannt, die für das Naßspritzverfahren erforderliche Anlage aus je für sich verwendbaren Komponenten zusammenzustellen, wobei lediglich die Spritzdüse mit ihren Zuleitungen und ggf. die Zugabe- und Dosiereinrichtung des Erstarrungsbeschleunigers anlagenspezifisch gebaut sind. Das bedeutet, daß die Druckluftversorgung aus einer Druckluftleitung erfolgt, die von einem zentralen Drucklufterzeuger beaufschlagt ist, welcher im Berg- und Tunnelbau in der Regel in großer Entfernung von der Arbeitsstelle und damit von der Betonpumpe aufgestellt ist. Bei mobilen Anlagen für das Naßspritzverfahren werden auch dezentrale, meistens fahrbare Drucklufterzeuger (Kompressoren) eingesetzt. In der Regel steht deshalb die Druckluft mit einem vorgegebenen Druck von z. B. ca. 4 bar am Eingang der Naßspritzanlage und in beliebiger, bei den mobilen Anlagen aber jedenfalls in einer für die maximale Betonmenge der Betonpumpe ausreichenden Menge zur Verfügung. Vielfach übersteigt jedoch der Volumenstrom des Drucklufterzeugers die für eine durch die Betonpumpe vorgegebene maximale Betonfördermenge notwendige Druckluftmenge bei weitem, weil der Drucklufterzeuger auch noch für andere Zwecke als das Naßspritzen eingesetzt wird.

Der Betonvolumenstrom wird dann in der Regel von dem zwar veränderbaren aber fest eingestellten Fördervolumen der Betonpumpe bestimmt. Hierbei sind die Belegschaften bestrebt, die Anlage mit einem hohen Druckluftüberschuß zu betreiben. Das hat unterschiedliche Gründe, jedoch für den Düsenführer u. a. den Vorteil, daß die Gebirgsoberfläche mit Sicherheit von den Betonpartikeln erreicht wird; die beim übermäßigen Druckluftvolumenstrom verstärkt auftretenden Betonrückprallerscheinungen werden meistens nicht beachtet. Allerdings muß der Düsenführer durch die Bedienung von Absperrhähnen im Einzelfall dafür sorgen, daß den unterschiedlichen Bedingungen für das Auftragen des Betons in der Firste und an den Streckenstößen Rechnung getragen wird.

Es hat sich nun herausgestellt, daß bei einem gegebenen Wasseranteil der Feinstaubanfall um so geringer ist, je geringer die in der Zeiteinheit einem gegebenen Betonvolumenstrom zugesetzte Druckluftmenge ist.

Der Erfindung liegt die Aufgabe zugrunde, auf dieser Grundlage eine Betonpumpe zu schaffen, welche einerseits den Feinstaubanfall minimiert, andererseits aber sicherstellt, daß die für das Naßspritzverfahren notwendigen Druckluftmengen in jedem Augenblick an der Düse zur Verfügung stehen.

Eine erste Lösung dieser Aufgabe ergibt sich aus den Merkmalen des Anspruches 1. Weitere Ausgestaltungen der Erfindung sind Gegenstand der Unteransprüche.

Gemäß der im Anspruch 1 wiedergegebenen Lehre der Erfindung werden die an der Düse zur Verfügung gestellten Druckluftmengen geregelt, so daß ihr Augenblickswert der jeweils geförderten Betonmenge entspricht, wobei jedoch der Soll-Wert der Druckluftmenge derart vorgegeben wird, daß er dem erreichbaren Minimalwert des Feinstaubanfalles an der Düse entspricht, was identisch mit der Mindestmenge der Druckluft ist, die für die Betonförderung technisch erforderlich ist. Hierbei kann man davon ausgehen, daß das Verhältnis von Druckluftmenge in m³ je Minute zu Beton in m³ je Stunde etwa 1 : 1 beträgt, im übrigen aber diese Faustformel durch genauere Messungen noch verbessert werden kann.

Die Erfindung hat den Vorteil, daß sie die Belegschaft daran hindert, die Naßspritzanlage mit einem ungerechtfertigt hohen Druckluftvolumenstrom zu betreiben, bei dem sie durch ein Übermaß an anfallendem Feinstaub gefährdet ist. Da die Regelstrecke erfindungsgemäß an der Betonpumpe installiert ist, kann die Belegschaft auch nicht durch Manipulationen am Drucklufterzeuger, insbesondere wenn dieser dezentral aufgestellt ist, den Druckluftvolumenstrom willkürlich ändern, der an der Düse zur Verfügung gestellt wird. Auf diese Weise wird einerseits ein an den jeweiligen Betonvolumenstrom optimal angepaßter Druckluftdurchsatz erreicht, welcher für das Auftragen und Verdichten des Betons auf der Gebirgsoberfläche ausreicht, jedoch eine minimale Gefährdung der Belegschaft durch überhöhten Feinstaub vermeidet.

Grundsätzlich kann die Ermittlung der Führungsgröße durch eine magnetisch induktive Durchflußmessung des gepumpten Betons erfolgen. Solche Meßverfahren setzen jedoch außerordentlich aufwendige Vorrichtungen voraus, die zu einer erheblichen Verteuerung der Betonpumpe und damit der für das Naßspritzverfahren erforderlichen Anlage führen. Die Verwirklichung der Merkmale des Anspruches 2 hat demgegenüber den Vorteil, daß die Führungsgröße indirekt, d. h. mit Hilfsgrößen ermittelt wird, die sich von den Betriebsgrößen der Betonpumpe ableiten lassen.

Eine Möglichkeit für diese Ausführungsform der Erfindung beinhaltet der Anspruch 3. Nach der dort gekennzeichneten Verwendung einer Zweizylinderkolbenbetonpumpe liefert die Zahlung der Schaltvorgänge eines Schiebers, der zum Steuern der Betonförderleitung dient, ein Maß für die durchgesetzte Betonmenge. Der Schieber ist erforderlich, um das wechselseitige Ansaugen des Betons aus einem Vorfüllbehälter und das wechselseitig erfolgende Fördern der Zylinder in die Betonförderleitung zu steuern. Diese Ausführungsform der Erfindung ist dann besonders einfach, wenn der Schieber mit einem doppelt wirkenden Linearantrieb, z. B. einem hydraulischen Zylinder betätigt wird. Die Zählung der Schaltvorgänge kann mit einem induktiven Geber oder elektromechanisch erfolgen.

Da der volumetrische Wirkungsgrad von Zweizylinderkolbenbetonpumpen im wesentlichen von der jeweils geförderten Betonmenge unabhängig ist, so bieten auch die je Zeiteinheit ausgeführten Kolbenhübe der Zylinder ein genaues Maß für die jeweils durchgesetzten Betonmengen. Die Verwendung dieser Hilfsgröße als Führungsgröße in der erfindungsgemäßen Betonpumpe ist Inhalt des Anspruches 4.

Die Zweizylinderkolbenbetonpumpen werden bei moderner Ausführung in der Regel hydraulisch angetrieben. Dabei ordnet man zweckmäßig jedem Betonförderzylinder einen hydraulischen Antriebszylinder zu. Das bietet die Möglichkeit, als Führungsgröße den Volumenstrom des hydraulischen Antriebsmediums der Betonpumpe je Zeiteinheit, also den durch die Antriebszylinder durchgesetzten hydraulischen Volumenstrom zu verwenden. Diese Ausführungsform der Erfindung ist im Anspruch 5 wiedergegeben.

Bei der Verwendung eines der Betonpumpe unmittelbar zugeordneten hydraulischen Druckerzeugers in z. B. Form einer Schiefscheibenkolbenpumpe können bei dieser Ausführungsform der Erfindung entweder der Schwenkwinkel oder der zur Veränderung des Schwenkwinkels erforderliche Steuerdruck als Hilfsgröße für die Ermittlung der Führungsgröße benutzt werden, was Gegenstand des Anspruches 6 ist.

Eine andere Möglichkeit zur Ermittlung der Führungsgröße bietet sich an, wenn bei der bevorzugten Verwendung der erfindungsmäßen Betonpumpe ein Erstarrungsbeschleuniger dem Betonvolumenstrom zugemischt wird. Dann nämlich kann zur Bildung der Führungsgröße eine oder auch mehrere Hilfsgrößen benutzt werden, die von der Dosieranlage abgeleitet sind, und aus denen sich die Führungsgröße ermitteln läßt. Das ist Gegenstand des Anspruches 8. Hierbei kann ein induktiver Geber oder Tachogenerator des Dosieranlagenantriebsmotors die Führungsgröße liefern. Bei diesen Hilfgrößen kann es sich um die Erfassung der Drehzahl eines die Dosierpumpe antreibenden Motors durch einen Tachogenerator oder um die Anzahl der Hübe einer Kolbendosierpumpe handeln.

Eine zweite Lösung der Erfindungsaufgabe ist im Anspruch 9 wiedergegeben. Ausführungsformen dieses Lösungsgedankens beinhaltet der auf den Anspruch 9 zurückbezogene Unteranspruch.

Bei dieser Erfindungslehre fehlt eine Rückkopplung des Druckluftvolumenstromes. Diese ist zugunsten eines offenen Steuerkreises verlassen, wobei dann jeder Stellung der Steuerung ein definierter Druckluftvolumenstrom zugeordnet ist. Aber auch dann ist gewährleistet, daß die Druckluftmenge in der Weise auf den Volumenstrom des Betons abgestimmt wird, daß einerseits der Feinstaubanfall minimiert, andererseits aber die für das Auftragen und Verdichten des Betons erforderliche Mindestdruckluftmenge erreicht wird.

Zum besseren Verständnis wird die Erfindung im folgenden anhand der Zeichnungen näher erläutert, welche mehrere Ausführungsformen der Erfindung wiedergeben; es zeigen
- Fig. 1: ein Schaltbild einer ersten Ausführungsform der Erfindung,
- Fig. 2: in der Fig. 1 entsprechender Darstellung eine weitere Ausführungsfom der Erfindung,
- Fig. 3: ein Schaltbild einer im Rahmen der Erfindung zu verwendenden hydraulischen Zweizylinderkolbenbetonpumpe und
- Fig. 4: eine Ausführungsform nach einem abgeänderten Lösungsvorschlag der Erfindung.

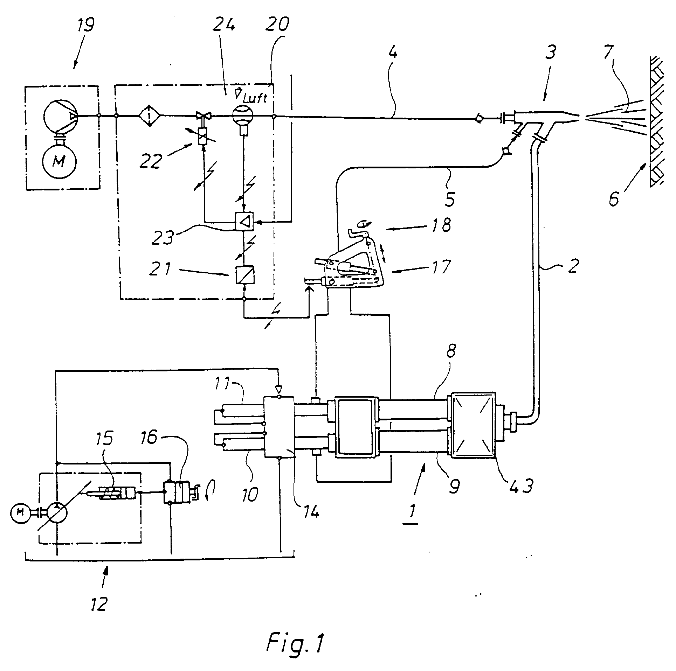

Gemäß der Darstellung der Fig. 1 wird mit Hilfe einer Betonpumpe 1 im beschriebenen Naßspritzverfahren normgerechter Beton durch eine Förderleitung 2 zu einer Mischdüse 3 gepumpt. In der Mischdüse wird Druckluft aus einer Schlauchleitung 4 und Erstarrungsbeschleuniger aus einer weiteren Schlauchleitung 5 in den Betonstrom eingemischt, bevor dieser die Düse 3 verläßt. Mit Hilfe der Düse 3 wird die Mischung auf eine Gebirgsoberfläche 6 aufgetragen und dort verdichtet. Der Düsenstrahl ist bei 7 wiedergegeben.

Die Betonpumpe ist gemäß der dargestellten Ausführungform eine Zweizylinderbetonkolbenpumpe. Sie weist dementsprechend zwei Betonförderzylinder 8, 9 auf, welche aus einem Vorfüllbehälter 43 den fertig gemischten Beton ansaugen und in die Leitung 2 wechselseitig drücken. Die Kolben in den Förderzylindern 8, 9 werden hydraulisch angetrieben. Dazu sind die Kolben druck- und zugfest mit Kolbenstangen von hydraulischen Antriebszylindern 10, 11 verbunden, welche doppelt wirken. Aus dem nur teilweise dargestellten Druckerzeuger 12 erhalten die Antriebszylinder 10, 11 von einer Steuerung 14 das hydraulische Druckmittel. Im Druckerzeuger ist der Antriebsmotor M₁ gekoppelt mit einer Welle mit der zur Druckerzeugung dienenden Kolbenpumpe. Der Schwenkwinkel der Kolbenpumpe wird über einen Hilfszylinder 15 bei 16 eingestellt.

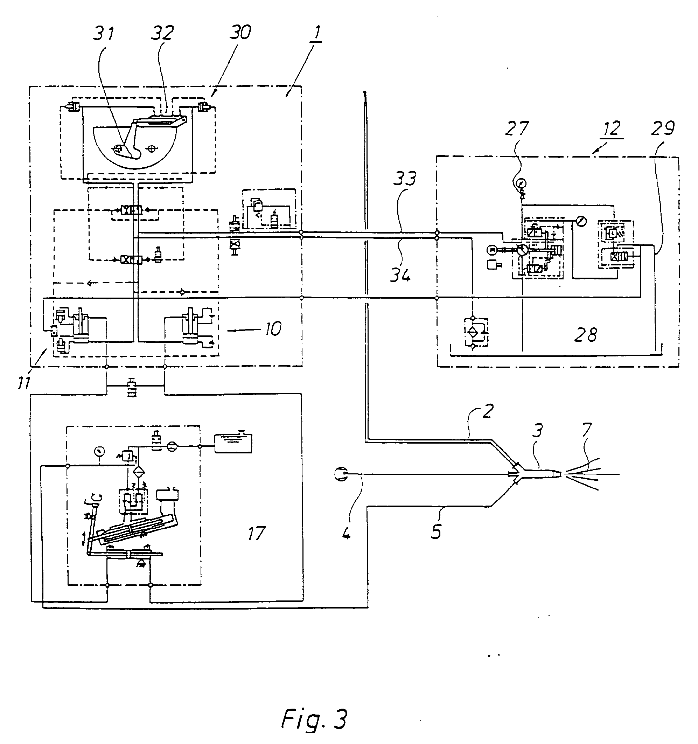

In der Fig. 3 ist die Betonpumpe genauer dargestellt. Der hydraulische Druckerzeuger 12 ist mit einem Druckmeßgerät 27 und einer automatischen Schwenkeinrichtung 28 für die hydraulische Pumpe ausgerüstet. Mit der Steuerung bei 29 wird für einen einwandfreien, d. h. hinreichend großen Volumenstrom gesorgt, falls nur eine geringe Menge des Druckmittels von den Förderantriebszylindern 10, 11 der Betonpumpe 1 abgenommen wird. Bei 30 ist der im Vorfüllbehälter 43 zur Steuerung der Betonförderleitung 2 untergebrachte Steuerschieber 31 mit seinem doppelt wirkenden Linearantrieb 32 wiedergegeben. Er wird in Abhängigkeit von den Förderhüben in den Zylindern 8, 9 gesteuert. Im übrigen ist die Betonpumpe über die Leitungen 33, 34 mit dem Druckerzeuger 12 verbunden.

Von den Antriebszylindern 10, 11 ist nach Fig. 1 die Steuerung einer Dosierpumpe 17 für Erstarrungsbeschleuniger abgeleitet. Mit Hilfe der Steuerung 18 läßt sich der Volumenstrom der Dosierpumpe 17, der durch die Leitung 5 in die Düse 3 gelangt verstellen und damit dem Betonvolumenstrom anpassen.

Die für das Verfahren erforderliche Druckluft wird von einem Drucklufterzeuger 19 in die Leitung 4 gedrückt. Gemäß der Darstellung der Fig. 1 sitzt der Kompressor auf einer Welle eines Antriebsmotors M₂.

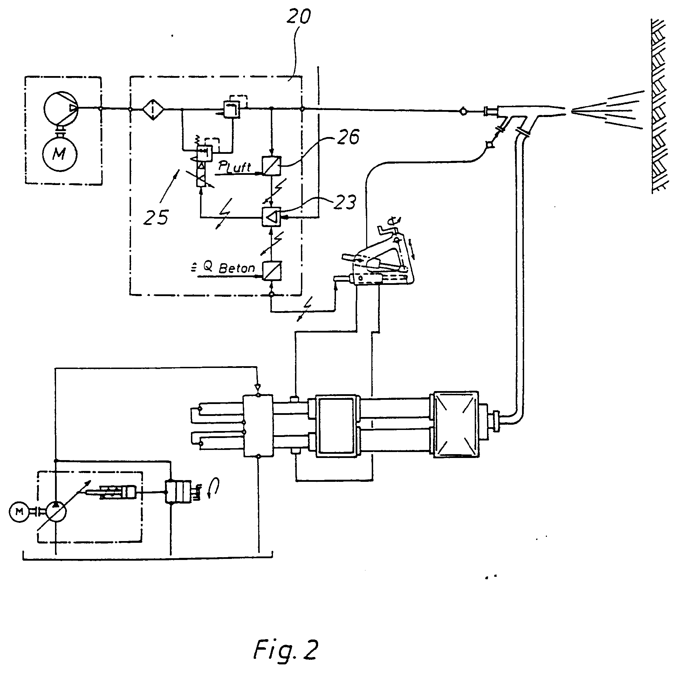

In Fig. 1 und 2 steht mit der Dosierpumpe 17 ein Regler 20 in Verbindung. Die Regelstrecke ist durch die strichpunktierte geschlossene Linie bezeichnet. Da die Dosierpumpe 17 auf den Betonstrom in der Leitung 2 durch Abgriff der Antriebszylinder 10, 11 eingestellt ist, wird in der elektronischen Regelstrecke der Volumenstrom in der Leitung 2 bei 21 wiedergegeben. Ein Absperr- und Drosselorgan 22 wird von dem Regler gemäß dem bei 23 eingestellten Soll-Wert verstellt. Wie in Fig. 1 dargestellt, wird der Volumenstrom hinter dem Drosselorgan 22 bei 24 gemessen und auf den Regler 23 rückgekoppelt. Die Messung des Volumenstromes ist auch vor dem Drosselorgan möglich.

Im Betrieb wird durch die Regelstrecke 21, in der das Fördervolumen der Betonpumpe 1 die Führungsgröße für die bei 22 erfolgende Mengensteuerung der der Mischdüse 3 zuströmenden Druckluft bildet, das Verhältnis der je Zeiteinheit eingemischten Druckluftmenge zu der je Zeiteinheit gepumpten Betonmenge einem eingestellten Soll-Wert entsprechend geregelt, welcher dem kleinsten Feinstaubanfall beim Auftragen des Betons auf die Fläche 6 entspricht.

Das Ausführungsbeispiel der Fig. 2 unterscheidet sich von der Ausführungsform nach Fig. 1 durch die Ausbildung der Regelstrecke 21. Hiernach wird der Druck hinter dem Stellglied 25 der Regelstrecke bei 26 gemessen und auf den Regler 23 zurückgekoppelt.

In der Fig. 3 ist ein Regler nicht dargestellt, welcher in Abhängigkeit von den in der Zeiteinheit ausgeführten Bewegungen des Schiebers 31, d. h. den Hüben im Linearantrieb 32, die Druckluftmenge steuert, welche durch die Leitung 4 in die Düse 3 gelangt.

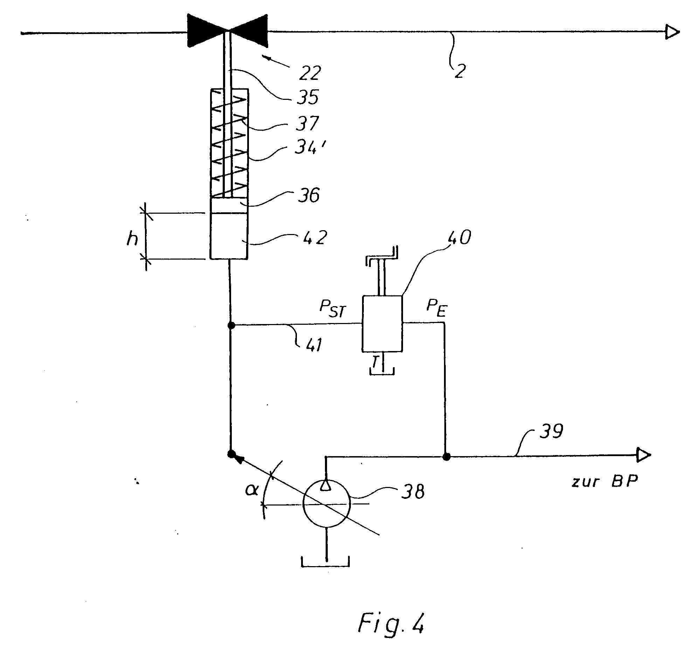

In der Darstellung der Fig. 4 ist eine Steuerung wiedergegeben, bei der das Absperr- und Drosselorgan 22 gemäß der dargestellten Ausführungsform einen hydraulischen Antriebszylinder 34' zur Bewegung eines Schiebers aufweist. An den Schieber ist die Kolbenstange 35 angeschlossen, deren Kolben 36 auf einer Spiralfeder 37 abgestützt ist, die normalerweise den Schieber in die Offenstellung drückt. Der mit h bezeichnete Kolbenhub ist ein Maß für die Drosselung der durch die Leitung 2 und damit für den in der Zeiteinheit fließenden Volumenstrom.

Der Schwenkwinkel α der Pumpe 38 des Druckerzeugers hängt von dem hydraulischen Druck in der Steuerleitung ab. Dieser Steuerdruck P_{ST} wird bestimmt durch ein Steuerdruckeinstellventil 40, welches vom Eingangsdruck P_{E} gespeist wird. Der Steuerdruck P_{ST} gelangt über die Leitung 41 einerseits zur Pumpe 38 des Druckerzeugers und bewirkt dort die Verstellung des Schwenkwinkels α und andererseits zum Kolbenraum 42 des Arbeitszylinders 34' und bewirkt dort die Verstellung der Gröpe h, von der das Verhältnis der je Zeiteinheit an der Düse anstehenden Druckluftmenge zu der je Zeiteinheit gepumpten Betonmenge proportional bzw. proportional integral abhängt. Das beruht darauf, daß der Druck in der Leitung 39 auch ein Maß für die geförderte Betonmenge ist. Auch in diesem Fall entspricht der Volumenstrom in der Leitung 2 dem kleinsten Feinstaubanfall beim Auftragen des Betons.

Abweichend von den dargestellten und vorstehend beschriebenen Ausführungsformen der Erfindung kann auch die Geschwindigkeit der Kolbenstangen der hydraulischen Antriebszylinder 10, 11 die Hilfsgröße zur Ermittlung der Führungsgröße bilden, die dem Regler 20 zugeführt wird.

## Patentansprüche

1. Betonpumpe für das Naßspritzverfahren, bei dem ein normgerechter Beton zu einer Mischdüse gepumpt, in dieser Druckluft und ggf. Erstarrungsbeschleuniger in den Betonstrom eingemischt und dieser mit der Düse aufgetragen und verdichtet wird, gekennzeichnet durch eine Regelstrecke (21), in der das Fördervolumen der Betonpumpe (1) die Führungsgröße für eine Mengenregelung der der Mischdüse (3) zuströmenden Druckluft in der Weise bildet, daß das Verhältnis Ist-Wert der je Zeiteinheit eingemischten Druckluftmenge zu der je Zeiteinheit gepumpten Betonmenge einem Soll-Wert entspricht, welcher den kleinsten Staubanfall beim Auftragen des Betons wiedergibt.

2. Betonpumpe nach Anspruch 1, dadurch gekennzeichnet, daß zur Bildung der Führungsgröße eine oder mehrere Hilfsgrößen dienen, die von der Betonpumpe (1) abgeleitet sind und aus denen die Führungsgröße ermittelbar ist.

3. Betonpumpe nach einem der Ansprüche 1 oder 2, dadurch gekennzeichnet, daß unter Verwendung einer Zweizylinderkolbenpumpe zur Betonförderung die Anzahl der von dem zur Steuerung der Betonförderleitung (2) zur Düse (3) dienenden Schieber (31) ausgeführten Schieberbewegungen je Zeiteinheit als Führungsgröße dient.

4. Betonpumpe nach einem der Ansprüche 1 oder 2, dadurch gekennzeichnet, daß die Anzahl der je Zeiteinheit ausgeführten Kolbenhübe in den Betonförderzylindern (8, 9) als Führungsgröße dient.

5. Betonpumpe nach einem der Ansprüche 1 oder 2, dadurch gekennzeichnet, daß bei hydraulischem Antrieb (12) der Betonförderzylinder (8, 9) einer Zweizylinderkolbenbetonpumpe (1) durch je einen hydraulischen Antriebszylinder (10, 11) als Führungsgröße der je Zeiteinheit durch die Antriebszylinder (10, 11) durchgesetzte hydraulische Volumenstrom dient.

6. Betonpumpe nach Anspruch 1 und einem der Ansprüche 2 bis 5, dadurch gekennzeichnet, daß bei Verwendung eines hydraulischen Druckerzeugers (12) mit einer verstellbaren Pumpe der Steuerdruck zur Verstellung des Schwenkwinkels der Pumpe als Führungsgröße dient.

7. Betonpumpe nach Anspruch 5, dadurch gekennzeichnet, daß bei Verwendung eines hydraulischen Druckerzeugers (12) mit einer verstellbaren Pumpe deren Schwenkwinkel als Führungsgröße dient.

8. Betonpumpe nach Anspruch 1, dadurch gekennzeichnet, daß bei Verwendung einer Dosierpumpe (17) für einen flüssigen Erstarrungsbeschleuniger die Anzahl der in der Zeiteinheit ausgeführten Hübe des Kolbens im Dosierpumpenzylinder oder die Drehzahl des Dosierpumpenantriebsmotors als Hilfsgröße dient.

9. Betonpumpe für das Naßspritzverfahren, bei dem ein normgerechter Beton zu einer Mischdüse gepumpt, in dieser Druckluft und ggf. Erstarrungsbeschleuniger in dem Betonstrom eingemischt und dieser mit der Düse aufgetragen und verdichtet wird, gekennzeichnet durch eine Steuerung mit offenem Steuerkreis, in dem ein Absperr- und Drosselorgan (22) in der Druckluftleitung (2) zur Düse (3) in der Weise beeinflußt wird, daß das Verhältnis der je Zeiteinheit eingemischten Druckluftmenge zu der je Zeiteinheit gepumpten Betonmenge einem Wert entspricht, welcher den kleinsten Feinstaubanfall beim Auftragen des Betons wiedergibt.

10. Betonpumpe nach Anspruch 9, dadurch gekennzeichnet, daß als Steuergröße der Steuerdruck in einer Steuerleitung (41) zur Verstellung des Schwenkwinkels einer Pumpe (38) eines Druckerzeugers dient.

## Claims

1. Concrete pump for wet spraying, wherein a standard concrete is pumped to a mixing nozzle, compressed air and possibly solidificaton accelerator is pumped therein into the stream of concrete and said stream of concrete is applied with the nozzle and compressed, characterized by a control system (21) in which the pump volume of the concrete pump (1) constitutes the command variable for a rate control of the compressed air flowing into the mixing nozzle (3) in such a way that the ratio of the actual value of the amount of compressed air mixed in per time unit to the amount of concrete pumped per time unit corresponds to a desired value representing the smallest amount of dust occurring during the application of the concrete.

2. A concrete pump according to claim 1, characterized in that one or several auxiliary factors which have been derived from the concrete pump (1) and on the basis of which the command variable can be determined serve for constituting the command variable.

3. A concrete pump according to any of claims 1 or 2, characterized in that using a two-cylinder piston pump for pumping the concrete, the number of sliding movements performed per time unit by the slide (31) serving for controlling the concrete delivery pipe (2) to the nozzle (3) serves as command variable.

4. A concrete pump according to any of claims 1 or 2, characterized in that the number of piston strokes performed in the concrete delivery cylinders (8, 9) per time unit serves as command variable.

5. A concrete pump according to any of claims 1 or 2, characterized in that in the case of a hydraulic drive (12) of the concrete delivery cylinder (8, 9) of a two-cylinder piston concrete pump (1) by means of one hydraulic drive cylinder (10, 11) each, the hydraulic volume flow passing through the drive cylinder (10, 11) per time unit serves as command variable.

6. A concrete pump according to claim 1 and one of claims 2 to 5, characterized in that if a hydraulic pressure generator (12) with an adjustable pump is used, the control pressure for adjusting the pivoting angle of the pump serves as command variable.

7. A concrete pump according to claim 5, characterized in that if a hydraulic pressure generator (12) with an adjustable pump is used, the pivoting angle thereof serves as command variable.

8. A concrete pump according to claim 1, characterized in that if a dosing pump (17) for a fluid solidification accelerator is used, the number of strokes performed by the piston in the dosing pump cylinder per time unit or the number of revolutions of the dosing pump drive motor serves as auxiliary factor.

9. A concrete pump for wet spraying, wherein a standard concrete is pumped to a mixing nozzle, compressed air and possibly a solidification accelerator are mixed therein into the concrete stream and said concrete stream is applied and compressed by means of the nozzle, characterized by a control with an open control circuit in which a shut-off and throttle device (22) in the compressed air pipe (2) to the nozzle (3) is influenced in such a way that the ratio of the amount of compressed air mixed in per time unit to the amount of concrete pumped per time unit corresponds to a value representing the smallest amount of fine dust occurring during the application of the concrete.

10. A concrete pump according to claim 9, characterized in that the control pressure in a control pipe (41) for adjusting the pivot angle of a pump (38) of a pressure generator serves as control factor.

## Revendications

1. Pompe à béton pour la projection humide, dans laquelle un béton conforme aux normes est pompé vers une buse mélangeuse, dans laquelle de l'air de compression et éventuellement un accélérateur de la prise sont mélangés avec le flux de béton, qui est appliqué et comprimé par la buse, **caractérisé par** un système réglé (21), dans lequelle le volume déplacé de la pompe à béton (1) constitue la grandeur de référence pour un réglage du débit de l'air de compression coulant vers la buse mélangeuse (3) de façon que la relation valeur réelle de la quantité d'air de compression mélangé par unité de temps à la quantité de béton pompé par unité de temps correspond à une valeur de consigne, qui reproduit la production de poussière lors de l'application du béton la plus faible.

2. Pompe à béton selon la revendication 1, **caractérisé en** **ce que** la grandeur de référence est constituée par une ou plusieurs grandeurs auxiliaires, qui sont déduit de la pompe à béton (1) et par lesquelles peut être déterminé la grandeur de référence.

3. Pompe à béton selon l'une des revendications 1 ou 2, **caractérisé en ce que**, sous l'application d'une pompe alternative à deux cylindres pour le transport du béton, le nombre des déplacements par unité de temps effectués par la palette (31) servant de commander la conduite de transport du béton (2) vers la buse (3), sert de grandeur de référence.

4. Pompe à béton selon l'une des revendications 1 ou 2, **caractérisé en ce que** le nombre des courses de piston dans les cylindres de transport du béton (8,9) effectué par unité de temps sert de grandeur de référence.

5. Pompe a béton selon l'une des revendications 1 ou 2, **caractérisé** **en ce que** dans un entrainement hydraulique (12) des cylindres de transport du béton (8,9) d'une pompe à béton alternative à deux cylindres (1) par un cylindre d'entrainement hydraulique (10,11) chacun, la grandeur de référence est constituée par le courant de volume débité par unité de temps à travers les cylindres d'entrainement (10,11).

6. Pompe à béton selon la revendication 1 et l'une des revendications 2 à 5, **caractérisé en ce que** sous l'application d'un générateur de pression (12) hydraulique avec une pompe reglable, la pression de commande pour le réglage de l'angle de pivotement de la pompe sert de grandeur de référence.

7. Pompe à béton selon la revendication 5, **caractérisé en** **ce que** sous l'application d'un générateur de pression (12) hydraulique avec une pompe reglable, l'angle de pivotement de la pompe sert de grandeur de référence.

8. Pompe à béton selon la revendication 1, **caracterisé en** **ce que** sous l'application d'une pompe de dosage (17) pour un accélerateur de la prise liquide, une grandeur auxiliaire est constitué par le nombre des courses du piston dans le cylindre de la pompe de dosage effectué par unité de temps, ou la vitesse de rotation du moteur d'entrainement de la pompe de dosage.

9. Pompe à béton pour la projection humide, dans laquelle un béton conforme aux normes est pompé vers une buse mélangeuse, dans laquelle de l'air de compression et éventuellement un accélérateur de la prise sont mélangés avec le flux de béton, qui est appliqué et comprimé par la buse, **caractérisé par** un réglage présentant un système asservi ouvert, dans lequel un organe d'obturation et d'étranglement (22) dans la conduite d'air de compression (2) vers la buse (3) est influencé de façon que la relation de la quantité d'air de compression mélangé par unité de temps la quantité de béton pompé par unité de temps correspond à une valeur, qui reproduit la production de poussière fine lors de l'application du béton la plus faible.

10. Pompe à béton selon la revendication 9, **caractérisé en** **ce que** la valeur d'influence est constitué par la pression de commande dans une conduite de commande (41) pour le réglage de l'angle de pivotement d'une pompe (38) d'un génerateur de pression.
